(19) **Europäisches Patentamt**
**European Patent Office**
**Office européen des brevets**

(11) **EP 4 615 092 A1**

(12) **EUROPEAN PATENT APPLICATION**
published in accordance with Art. 153(4) EPC

(43) Date of publication:
**10.09.2025   Bulletin 2025/37**

(21) Application number: **23886267.6**

(22) Date of filing: **01.11.2023**

(51) International Patent Classification (IPC):
**H04W 72/04** (2023.01)      **H04W 72/21** (2023.01)
**H04W 72/23** (2023.01)      **H04W 8/24** (2009.01)
**H04L 5/00** (2006.01)      **H04L 27/26** (2006.01)

(52) Cooperative Patent Classification (CPC):
**H04L 5/00; H04L 27/26; H04W 8/24; H04W 72/04;
H04W 72/21; H04W 72/23**

(86) International application number:
**PCT/KR2023/017263**

(87) International publication number:
**WO 2024/096571 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022   KR 20220146513**

(71) Applicant: **LG Electronics Inc.**
**Yeongdeungpo-gu**
**Seoul 07336 (KR)**

(72) Inventors:
- **CHOI, Seunghwan**
  **Seoul 06772 (KR)**
- **YANG, Suckchel**
  **Seoul 06772 (KR)**
- **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR TRANSMITTING AND RECEIVING SIGNALS IN WIRELESS COMMUNICATION SYSTEM**

(57)    A method and apparatus for transmitting and receiving signals in a wireless communication system, disclosed in the present specification, performs uplink switching for 1-port transmissions performed in each of four bands. A preferred case from among the number of possible cases of the uplink switching may be reported to a network. The minimum value from among values of each of the number of cases is used as a switching gap applied to the uplink switching

【FIG. 5】

Indicating capability for switching period —— S501

Perform second transmission after first transmission
(perform second transmission in a state capable of supporting first transmission) —— S503

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

In an aspect of the present disclosure, provided herein is a method of transmitting and receiving signals by a user equipment (UE) in a wireless communication system. The method includes: indicating capabilities for switching period AC for a band pair consisting of band A and band C, switching period AD for a band pair consisting of the band A and band D, switching period BC for a band pair consisting of band B and the band C, and switching period BD for a band pair consisting of the band B and the band D; and performing 1-port transmission on each carrier of the bands C and D after performing 1-port transmission on each carrier of the bands A and B. For one instance of uplink switching including the bands A, B, C, and D, information on which of case 1 or case 2 is preferred for the uplink switching is reported. The case 1 is a case in which one of two transmission (Tx) chains switches from the band A to the band C and the other Tx chain switches from the band B to the band D. The case 2 is a case in which one of two Tx chains switches from the band A to the band D and the other Tx chain switches from the band B to the band C.

In another aspect of the present disclosure, provided herein is a method of transmitting and receiving signals. The method includes: receiving from a UE capabilities for switching period AC for a band pair consisting of band A and band C, switching period AD for a band pair consisting of the band A and band D, switching period BC for a band pair consisting of band B and the band C, and switching period BD for a band pair consisting of the band B and the band D; and receiving 1-port transmission on each carrier of the bands C and D after receiving 1-port transmission on each carrier of the bands A and B from the UE. Based on that one instance of uplink switching including the bands A, B, C, and D is performed, information on which of case 1 or case 2 the UE prefers for the uplink switching is reported, The case 1 is a case in which one of two transmission (Tx) chains switches from the band A to the band C and the other Tx chain switches from the band B to the band D. The case 2 is a case in which one of two Tx chains switches from the band A to the band D and the other Tx chain switches from the band B to the band C.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

## ADVANTAGEOUS EFFECTS

According to one embodiment of the present disclosure, when control and data signals are transmitted and received between communication devices, the signals may be transmitted and received more efficiently based on operations different from those in the prior art

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.
3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

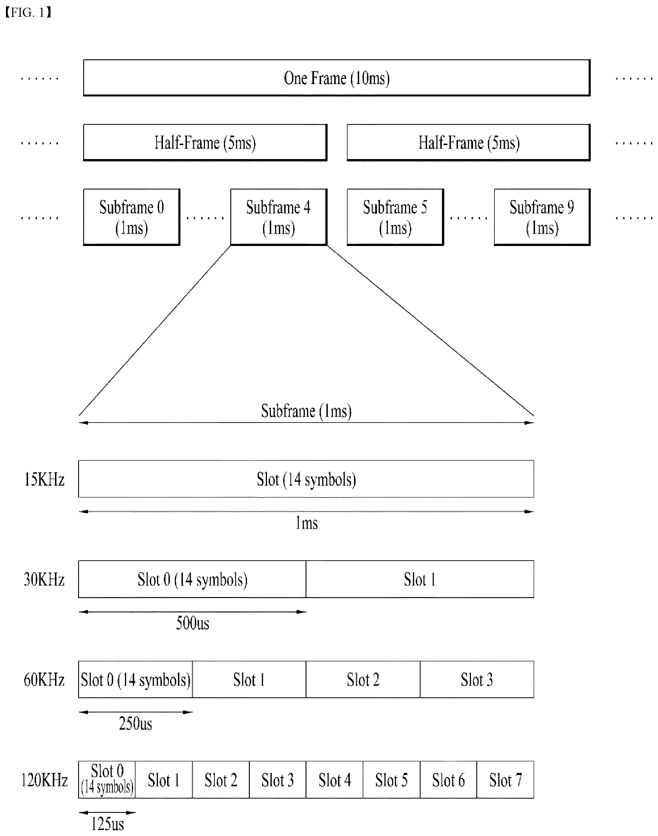

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

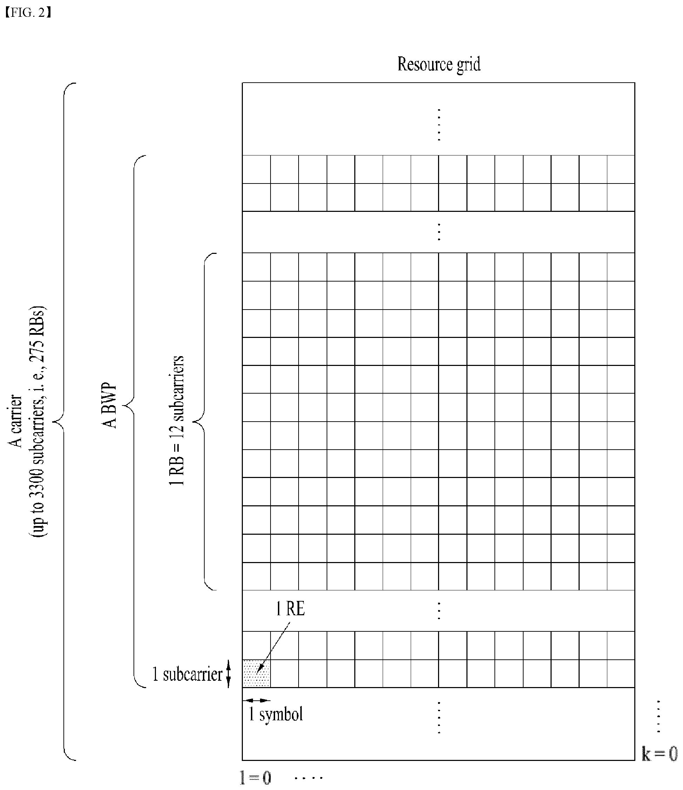

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

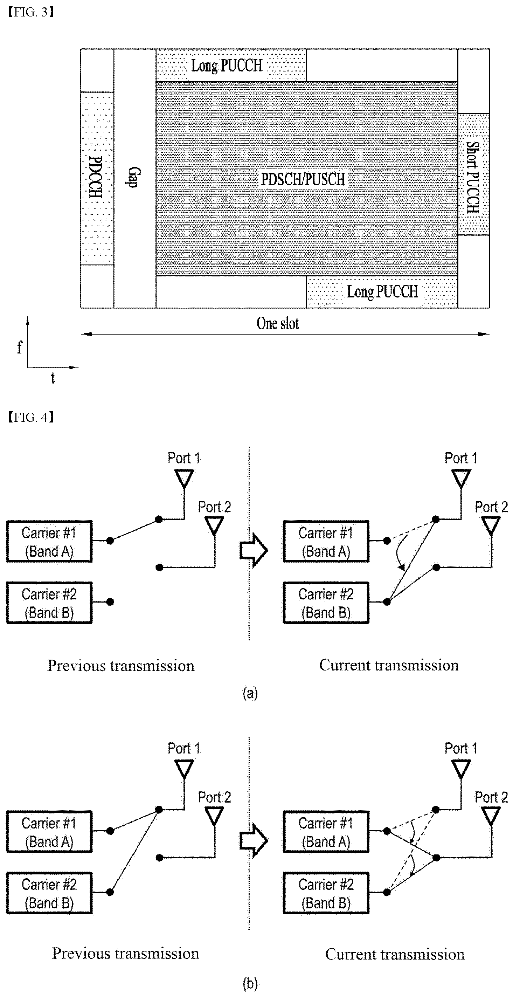

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

<u>UL Physical Channels/Signals</u>

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.

- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.

- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 4]

| PUCCH format | Length in OFDM symbols $N_{symb}^{PUCCH}$ | Number of bits | Usage | Etc |
|---|---|---|---|---|
| 0 | 1 - 2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K = 2)
- Number of OFDM symbols included in one PUCCH: 1 to X symbols (e.g., X = 2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K = 2)
- Number of OFDM symbols included in one PUCCH: Y to Z symbols (e.g., Y = 4 and Z = 14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K = 2)
- Number of OFDM symbols included in one PUCCH: 1 to X symbols(e.g., X = 2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K = 2)

- Number of OFDM symbols included in one PUCCH: Y to Z symbols (e.g., Y = 4 and Z = 14)

- Transmission structure: UCI and a DMRS are configured/mapped in/to different symbols based on TDM. The DFT is applied to encoded UCI bits with no multiplexing between UEs.

## Uplink switching with 3 or 4 uplink bands

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Generally, due to a size of a UE, the number of antennas to be installed on the corresponding UE is limited. A UE with N transmission chains via N antennas may support up to N 1-port UL transmissions simultaneously or up to N-port UL transmissions. A method is required to support a UE with a limited transmission chain to perform UL transmission effectively. Hereinafter, implementations of this specification for UL transmission (Tx) switching are described. Most UEs developed to date support up to two Tx chains, and thus the implementations of this specification are described below assuming that the UE supports UL transmission through up to two Tx chains, i.e., up to two ports. However, implementations of this specification are not limited to 1-port or 2-port UL transmission, but may also be applied to N-port UL transmission, where N may be greater than 2.

FIG. 4 is a diagram illustrating a concept of UL transmission switching.

To increase the throughput and efficiency of UL transmission, NR Rel-16 provides UL Tx switching (UTS), which switches Tx chain(s) connected to UL carrier(s) under a certain condition, for the purpose of enabling a UE to effectively perform 1-port UL transmission or 2-port UL transmission by using up to two Tx chains. FIG. 4(a) illustrates 1Tx-2Tx switching between two carriers/bands, and FIG. 4(b) illustrates 2Tx-2Tx switching between two carriers/bands.

For example, if UL transmission (hereinafter, "previous transmission") is performed on carrier #1 with 1 Tx chain, and then UL transmission (hereinafter, "current transmission") is configured/indicated to be performed on another carrier #2 with 2 Tx chains, the UE may switch the Tx chain connected to carrier #1 to carrier #2 to enable 2-port UL transmission on carrier #2. These UTS configuration and switching method may be applied to band combinations corresponding to evolved-universal terrestrial radio access new-radio-dual connectivity (EN-DC) without supplementary UL (SUL), standalone SUL, and inter-band CA. In NR Rel-17, an additional condition is introduced to extend the 1Tx-2Tx switching (i.e., switching between 1 Tx chain and 2 Tx chain) of existing NR Rel-16 to 2Tx-2Tx switching (i.e., switching between 2 Tx chain and 2 Tx chain), and at the same time, UTS between two carriers introduced in NR Rel-16 is extended to allow UTS between two different bands (e.g., 1 carrier in one band and 2 contiguous carriers in another band).

When a certain condition is satisfied and the UE is configured with uplinkTxSwitching via RRC signaling, the UE may omit UL transmission during uplink switching gap NTx1-Tx2. For example, when certain conditions are satisfied and the UE is configured with uplinkTxSwitching via RRC signaling, the UE omits all UL transmission(s), including UL transmission scheduled via DCI and UL transmissions configured by higher layer signaling (e.g., configured grant-based PUSCH), during a UL switching gap $N_{Tx1-Tx2}$. The switching gap NTx1-Tx2 may be indicated by uplinkTxSwitchingPeriod2T2T provided from the UE to the BS via UE capability report when uplinkTxSwitching-2T-Mode is configured via RRC signaling, otherwise the switching gap NTx1-Tx2 may be indicated by uplinkTxSwitchingPeriod provided from the UE to the BS via UE capability report. Here, the RRC configuration uplinkTxSwitching may be provided to the UE as included in a configuration regarding a serving cell, and may include uplinkTxSwitchingPeriodLocation indicating whether a location of a UL Tx switching period is configured on the UL carrier in case of inter-band UL CA, SUL or (NG)EN-DC, and uplinkTxSwitchingCarrier indicating that the configured carrier is carrier 1 or carrier 2 for dynamic UL Tx switching. The RRC parameter uplinkTxSwitching-2T-Mode indicates that a 2Tx-2Tx switching mode is configured for inter-band UL CA or SUL, in which case a switching gap duration for triggered UL switching may be equal to a switching time capability value reported for the switching mode. When the RRC parameter uplinkTxSwitching-2T-Mode is not provided and uplinkTxSwitching is configured, it may be interpreted that 1Tx-2Tx UTS is configured, in which case there may be one UL (or one UL band in case of intra-band) configured with uplinkTxSwitching.

When the UE indicates the capability for UL switching for a band combination and configures the band combination to MCG using E-UTRA radio access and SCG using NR radio access, to UL CA, or to a serving cell with two UL carriers with higher layer (e.g., RRC) parameter supplementaryUplink, the switching gap may be present under certain conditions. For example, the following tables are taken from 3GPP TS 38.214 V17.1.0 and illustrate UTS conditions.

When UL switching is triggered for UL transmission starting at $T_0$, which is after $T_0 - T_{offset}$, the UE is not expected to cancel the UL switching, or to trigger any other new UL switching that occurs before $T_0$ for any other UL transmission scheduled after $T_0 - T_{offset}$, where $T_{offset}$ may be a UE processing procedure time defined for UL transmission triggering switching (e.g. see S5.3, S5.4, S6.2.1 and S6.4 of 3GPP TS 38.214 and S9 of 3GPP TS 38.213). The UE is not expected to perform more than one UL switching in a slot with $u_{UL} = max(u_{UL,1}, u_{UL,2})$, where $u_{UL,1}$ corresponds to a subcarrier spacing of an active UL BWP of one UL carrier before the switching gap and $u_{UL,2}$ corresponds to the subcarrier spacing of the active UL BWP of another UL carrier after the switching gap.

[Table 5]

6.1.6.1 Uplink switching for EN-DC

For a UE indicating a capability for uplink switching with *BandCombination-UplinkTxSwitch* for a band combination, and if it is for that band combination configured with a MCG using E-ULTRa radio accces and with a SCG using NR radio access (EN-DC), if the UE is configured with upling switching with paramenter *uplinkTxSwitching.*

    - for the UE configured with *switchedUL* by the parameter *uplinkTxSwitchingOption,* when the UE is to transmit in the uplink based on DCI(s) received before $T_0$ - $T_{offset}$ or based on a higher layer configuration(s):

        - when the UE is to transmit an NR uplink that takes place after an E-UTRA uplink on another uplink carrier then the UE is not expected to transmit for the duration of $N_{Tx-Tx2}$ on any of the two carriers.

        - when the UE is to transmit an E-UTRA uplink that takes place after an NR uplink on another uplink carrier then the UE is not expected to transmit for the duration of $N_{Tx-Tx2}$ on any of the two carriers.

        - the UE is not expected to transmit simultaneously on the NR uplink and the E-UTRA uplink. If the UE is scheduled or configured to transmit any NR uplink transmission overlapping with an E-UTRA uplink transmission, the NR uplink transmission is dropped,

    - for the UE configured with *uplinkTxSwitchingoption* set to 'dualUL', when the UE is to trasmit in the uplink based on DCI(s) received before $T_0$ - $T_{offset}$ or based on a higher layer configuration(s):

        - when the UE is to transmit an NR two-port uplink that takes place after an E-UTRA uplink on another uplink carrier then the UE is not expected to transmit for the duration of $N_{Tx1-Tx2}$ on any of the two carriers.

        - when the UE is to transmit an E-UTRA uplink that takes place after an NR two-port uplink on another uplink carrier then the UE is not expected to transmit for the duration of $N_{Tx1-Tx2}$ on any of the two carriers.

        - the UE is not expected to transmit simultaneously a two- port transmission on the NR uplink and the E-UTRA uplink.

    - in all other cases the UE is expected to transmit normally all uplink transmissions without interruptions.

    - when the UE is configured with *tdm-PatternConfig* or by *tdm-PatternConfig2*

        - for the E-UTRA subframes designated as uplink by the configuration, the UE assumes the operation state in which one-port E-UTRA uplink can be transmitted.

        - for the E-UTRA subframes other than the ones designated as uplink by the configuration, the UE assumes the operation state in which two-port NR uplink can be transmitted.

[Table 6]

6.1.6.2 Uplink switching for carrier aggregation

For a UE indicating a capability for uplink switching with *BandCombination-UplinkTxSwitch* or *uplinkTxSwitchingperiod2T2T* for a band combination, and if it is for that band combination configured with uplink carrier aggregation:

    - If the UE is configured with uplink switching with parameter *uplinkTxSwitching*, when the UE is to transmit in the uplink based on DCI(s) received before $T_0$ - $T_{offset}$ or based on a higher layer configuration(s):

        - When the UE is to transmit a 2-port transmission on one uplink carrier on one band and if the preceding uplink trasmission is a 1-port transmission on another uplink carrier on another band, then the UE is not expected to transmit for the duration of $N_{Tx1-Tx2}$ on any of the carriers.

        - When the UE is to transmit a 1-port transmission on one uplink carrier on one band and if the preceding uplink transmission is a 2-port transmission on another uplink carrier on another band, then the UE is not expected to transmit for the duration of $N_{Tx1-Tx2}$ on any of the carriers.

        - For the UE configured with *uplinkTxSwitchingOption* set to 'switchedUL', when the UE is to transmit a 1-port transmission on one uplink carrier on one band and if the preceding uplink transmission was a 1-port transmission on another uplink carrier on another band, then the UE is not expected to transmit for the duration of $N_{Tx1-Tx2}$ on any of the carriers.

        - For the UE configured with *uplinkTxSwitchingOption* set to 'dualUL', when the UE is to transmit a 2-port transmission on one uplink carrier on one band and if the preceding uplink transmission was a 1-port transmission on a carrier on the same band and the UE is under the operation state in which 2-port transmission cannot be supported in the same band, then the UE is not expected to transmit for the duration of $N_{Tx1-Tx2}$ on any of the carriers.

(continued)

- For the UE configured with *uplinkTxSwitchingOption* set to 'dualUL', when the UE is to transmit a 1-port transmission on one uplink carrier on one band and if the preceding uplink transmission was a 1-port transmission on another uplink carrier on another band and the UE is under the operation state in which 2-port transmission can be supported on the same uplink carrier, then the UE is not expected to transmit for the duration of $N_{Tx1-Tx2}$ on any of the carriers.

- For the UE configured with *uplinkTxSwitchingOption* set to 'dualUL', if the UE is configured with *OneT* with *uplinkTxSwitching-DualUL-TxState,* when the UE is under the operation state in which 2-port transmission can be supported on one carrier on one band followed by no transmission on any carrier on the same band and 1-port transmission on the other carrier on another band the UE shall consider this as if 1-port transmission was transmitted on both uplinks, otherwise the UE shall consider this as if 2-port transmission took place on the transmitting carrier.

- IF *uplinkTxSwithcing-2T-Mode* is configured, when the UE is to transmit a 2-port transmission on one uplink carrier on one band and if the preceding uplink transmission is a 2-port transmission on another uplink carrier on another band, then the UE is not expected to transmit for the duration of $N_{Tx1-Tx2}$ in any of the carriers.

- The UE is not expected to be scheduled or configured with uplink transmissions that result in simultaneous transmission on two antenna ports on one uplink carrier on one band, and any transmission on another uplink carrier on another band.

- In all other cases the UE is expected to transmit normally all uplink transmissions without interruptions.

[Table 7]

6.1.6.3 Uplink switching for supplementary uplink

For a UE indicating a capability for uplink switching with *BandCombination-UplinkTxSwitch* for a band combination, and if it is for that band combination configured in a serving cell with two uplink carriers with higher layer parameter *supplememaryUplink*:

- If the UE is configured with uplink switching with parameter *uplinkTxSwitching,*

- If the UE is to transmit any uplink channel or signal on a different uplink on a different band from the preceding transmission occasion based on DCI(s) received before $T_0$ - $T_{offset}$ or based on a higher layer configuration(s), then the UE assumes that an uplink switching is triggered in a duration of switching gap $N_{Tx1-Tx2}$, where $T_0$ is the start time of the first symbol of the transmission occasion of the uplink channel or signal and $T_{offset}$ is the preparation procedure time of the transmission occasion of the uplink channel or signal given in clause 5.3, clause 5.4, clause 6.2.1, clause 6.4 and in clause 9 of [6, TS 38,213]. respectively. During the switching gap $N_{Tx1-Tx2}$, the UE is not expected to transmit on any of the two uplinks.

- In all other cases the UE is expected to transmit normally all uplink transmissions without interruptions.

NR supports a wide spectrum across various frequency ranges. The availability of a spectrum is expected to increase in a 5G advanced market due to repurposing of bands originally used in previous generation cellular networks. Especially for a low-frequency FR1 band, an available spectral block tends to be more fragmented and distributed over narrower bandwidths. For an FR2 band and some FR1 bands, a multicarrier operation within a band is required as an available spectrum is to be widened. To satisfy diverse spectrum requirements, it is important to provide higher throughput and adequate coverage in a network by using these distributed spectrum band or wider bandwidth spectrum in a more spectrum/power efficient and flexible manner. For a multicarrier UL operation, the current specification has several limitations. For example, a 2TX UE may be configured with up to two UL bands to be changed only by RRC reconfiguration, and UL Tx switching may only be performed between the two UL bands for the 2Tx UE. Instead of RRC-based cell(s) reconfiguration, dynamically selecting carriers with UL Tx switching based on, for example, data traffic, TDD DL/UL configuration, bandwidth and channel conditions of each band may potentially lead to a higher UL data rate, spectrum utilization, and UE capacity.

For a higher UL data rate, spectrum utilization, and UE capacity, UTS between more than two bands is currently considered. Hereinafter, UTS trigger condition(s), UTS-related configuration method(s), and/or UTS operation method(s) required to support UTS between multiple bands (e.g., three or more bands) according to some implementations of this specification are described.

Hereinafter, a cell may be interpreted according to context. For example, the cell may mean a serving cell. The cell may include one DL component carrier (CC) and 0 to 2 UL CCs, but implementations of this specification described below are not limited thereto. In the following, unless otherwise specified, the terms cell and CC may be used interchangeably. In some implementations of this specification, the cell/CC may be replaced with an (active) BWP within the serving cell. Unless otherwise specified, in the implementations of this specification described below, the cell/CC may be used as a concept encompassing PCell, SCell, PsCell, and the like, which may be configured/expressed in a carrier aggregation (CA)/dual connectivity (DC) scenario.

Hereinafter, the term "band" means a frequency band, and the term "band" may be used interchangeably with the terms "carrier" and/or "cell" within the band. In this case, each band may include one carrier or multiple (e.g., two) contiguous (or non-contiguous) carriers. The proposed methods described below may be applied to inter-band UL CA, intra-band UL CA, NR-DC, EN-DC, (standalone) SUL scenarios and related band combinations (unless otherwise specified).

For convenience of explanation in the implementations of this specification described below, the following notation is used.

- When UTS occurs, it may be expressed as a UTS trigger.
- Band (or carrier) related to UTS: This may refer to a band/carrier before and after UTS occurs.
- A Tx chain transition time caused by UTS is denoted as a UTS gap (or UTS period). During the UTS gap, no UL transmission occurs in the band/carrier related to the UTS. The UTS gap (switching gap) and the UTS period (switching period) may be specifically distinguished as follows.

  ■ Switching period: Switching time reported by UE. Basically, this is a band pair unit including two bands, and is reported as one of values of {35 us, 140 us, and 210 us}. For a specific switching case, a single value may be reported as a band combination unit including three or more bands. In this specification, it may also be expressed as a UTS period/time or a switching period.
  ■ Switching gap: Time duration during which UL transmission in all (or some) bands related to a single UL Tx switching event due to this. The switching gap may be determined as a switching period (reported by a UE) for the corresponding Tx switching or determined by using the switching period of each band pair related to the corresponding Tx switching.

For example, for A(1T)+B(1T)->C(2T) switching, in which transmission occurs using 2 Tx chains on a band C while 1 Tx chain is connected to a band A and 1 Tx chain is connected to a band B, if a band combination {A+B, C} is reported by the UE, the switching gap is determined as a reported value. If not reported, the switching gap may be determined as a value derived using the switching period AB (period_AB) for a band pair including the bands A and B and the switching period AC (period_AC) for a band pair including the bands A and C. In this specification, it may also be expressed as a UTS gap/interval or a switching interval.

- A 1 Tx chain may be expressed as 1T, and a 2Tx chain may be expressed as 2T.
- 1-port UL transmission may be expressed as 1p, and 2-port UL transmission may be expressed as 2p.
- When 1 Tx chain or 2 Tx chains are connected to a certain band A (and/or carrier(s) belonging to the band A), these states may be expressed as A(1T) and A(2T), respectively.
- When 1 Tx chain is connected to each of two specific bands A (and/or carrier(s) belonging to band A) and band B (and/or carrier(s) belonging to band A), this state may be expressed as A(1T)+B(1T).
- UL transmission may mean any UL channel or UL signal supported by NR, and the like.
- "Previous transmission" may mean the most recent UL transmission performed by the UE prior to UTS triggering, and "current transmission" may mean UL transmission performed by the UE immediately (or simultaneously) with UTS triggering. The term "transmission" hereinafter may mean "UL transmission"
- The expression that UL transmission occurs may mean UL transmission scheduled via DCI for a UL grant and/or UL transmission configured via higher layer signaling (e.g., RRC signaling) (e.g., configured grant UL transmission).
- When 1-port UL transmission occurs in a specific band A (and/or carrier(s) belonging to band A), it may be expressed as A(1p), and when 2-port UL transmission occurs, it may be expressed as A(2p).
- When 1-port UL transmission occurs in two specific bands, e.g., band A and band B, (and/or carrier(s) belonging to the corresponding band), it may be expressed as A(1p)+B(1p).

Some implementations of this specification described below are described in terms of UTS generation between two bands in a situation in which four bands/carriers are configured (or activated). However, the same method(s) as the implementations of this specification described below may also be applied to UTS that occurs in a situation in which a smaller number of bands (e.g., 3) are configured/activated. The same method(s) as the implementations of this specification described below may also be applied to UTS that occurs in a situation in which a larger number of bands (e.g., 5) are configured/activated.

Some implementations of this specification described below are described without distinguishing between 1Tx-2Tx switching or 2Tx-2Tx switching. However, some implementations may be specifically applicable to 1Tx-2Tx switching and/or 2Tx-2Tx switching

In some implementations of this specification described below, the "simultaneous transmission" in multiple bands may mean that a start time (e.g., start symbol) of UL transmissions in each of the corresponding multiple bands coincide and/or some (or all) of the UL transmission resources/periods in each of the multiple bands overlap in time.

An RRC parameter uplinkTxSwitchingOption provided to the UE by the BS may indicate which option is configured for dynamic UL Tx switching for inter-band UL CA or (NG)EN-DC. This RRC parameter is configured to swtichedUL when a network configures Option1, and is configured to dualUL when the network configures Option2. When the UE receives the corresponding RRC value configured to "switchedUL", the UE does not expect/perform that 1 Tx chain is to be connected to each of the corresponding two bands, or does not expect/perform concurrent transmission (instruction/configuration) on the corresponding two bands even if 1 Tx chain is connected to each of the two bands. Hereinafter, this is expressed as an Option1 operation configured. For example, the UE configured with switchedUL may not expect concurrent transmission of A(1T) and B(1T) to be instructed/configured, and the BS may not instruct/configure concurrent transmission of A(1T) and B(1T) to the UE. When the UE receives the corresponding RRC value configured to "dualUL", the UE may expect to schedule/configure (or perform) concurrent transmission on the corresponding two bands via 1 Tx chains connected to each of the two bands, and this is expressed as an Option2 operation configured below.

In this specification, a part referred to as the Tx chain and Tx may be substituted with a transmission antenna connector, transmitter, or transmission chain.

**[1] Method of applying switching gap when Tx switching occurs in two bands due to 1-port UL transmission scheduled or configured for each of two bands**

[1-1] When 1-port UL transmission occurs in each of two UL bands in which a Tx chain is not connected (or configured), the Tx chain may be switched for UL transmission in the two bands. For example, when two Tx chains are connected to other bands (or two other **bands)** except for a band A and a band B, and 1-port UL transmission occurs in the band A and the band B respectively (for example, 1-port UL transmission may be scheduled via DCI for the corresponding band, or 1-port UL transmission may be configured for the corresponding band), one Tx chain may be switched to each of the band A and the band B.

[1-2] In NR Rel-16/17, Tx switching assumes an operation within two bands, and therefore, the existing Tx chain may only be switched within the corresponding two bands. **Due** to this, for the existing arbitrary Tx switching, the switch-to band is always 1. The switch-to-band is a band to which a Tx chain in a different band is switched and moved and refers to a band to which the Tx chain is connected after Tx switching. A switch-from band is a band before a Tx chain is switched and moved and refers to a band to which the Tx chain is connected before Tx switching. However, if Tx switching occurs for three (or four) bands, there may be two switch-to bands, and Tx switching may be triggered in each of two different bands, as in the situation described above in [1-1]. Due to this, the Tx switching operation and the UL transmission after switching may be differently performed depending on whether the UTS gap required for the Tx switching occurring in the two bands is the same and/or whether start points of the UL transmissions occurring in the two bands are the same.

[1-3] When a plurality of UL bands are configured in a UE, if a Tx chain is switched from a specific band to another specific band, UL transmission is not allowed during the corresponding UTS gap period in the two bands. In this case, in another specific band configured in the UE, UL transmission may not be allowed during the corresponding gap period (this may be expressed as [Configuration 1]) or may be allowed (this may be expressed as [Configuration 2]). For example, if there are bands A, B, and C, and the Tx chain is switched from the band A to the band B, UL transmission is not allowed during the corresponding UTS gap period in the band A, which is the switch-from band, and the band B, which is the switch-to band. In this case, in the band C and the band D, UL transmission is not allowed when configuring 1 is applied, and UL transmission is allowed when configuring 2 is applied.

[1-4] When 1-port UL transmission occurs on each of two UL bands in which the Tx chain is not connected (or configured) and UTS is triggered in the two bands due to this, if start points of the UL transmissions in the two bands are the same, the UTS gaps applied for the UL transmissions in each band may overlap each other. In this case, if lengths of the UTS gap configured for the two bands (or reported by the UE) are the same, the UTS gaps applied to the two bands may be the same period. However, if the lengths of the UTS gaps configured for the two bands (or reported by the UE) are different (for example, if each UTS gap is called gap_1 and gap_2), the UTS gap may be applied in one of the following two methods.

Method 1: In the case of [Configuration 1] described in [1-3], the UTS gap of a length of max{gap_1, gap_2} (i.e., the maximum value between gap1 and gap2) may be configured and **applied** as (common UTS gap) in the two bands such that the UTS gaps applied to the two bands may overlap each other as much as possible.

Method 2: In case of [Configuration 2] described in [1-3], Opt 1) UTS gap configured (or reported) for each band may be applied to the corresponding bands. As another method, in this case, Opt 2) a UTS gap of a length of max{gap_1, gap_2} may also be configured and applied to the corresponding two bands (as a common UTS gap). As another method, in this case, whether to apply Opt 1 or Opt 2 in this case may be configured/indicated via RRC, MAC-CE, or the like.

[1-5] When 1-port UL transmission occurs on each of two UL bands in which the Tx chain is not connected (or configured) and UTS is triggered in the two bands due to this, if transmission periods of UL transmissions in two bands overlap each other, the UTS gap may be applied using one of the following methods. (In this case, when the UL transmission periods overlap each other, this may mean that the UL transmissions of the two bands fully or partially overlap each other. For example, (when the start points of UL transmissions of two bands are different), this may correspond to a case in which a UL transmission period with a later start point starts before a UL transmission period with an earlier start point ends from among the UL transmissions of two bands. Alternatively, this may correspond to a case in which the start points of UL transmissions of two bands are the same, but the lengths of the respective UL transmission periods are different.)

Method 1: A UTS gap may be applied to the earlier UL transmission (start point) from among the two UL transmissions, and the later UL transmission (start point) may be dropped. Alternatively, the UE may not expect two UL transmissions corresponding to this relationship to occur.

Method 2: A UTS gap may be applied to an earlier UL transmission (start point) from among two UL transmissions, and a Tx chain may be switched in the UTS gap section (applied to the earlier UL transmission) in a band of the later UL transmission (start point). That is, for the later UL transmission band, the UTS gap period for switching the Tx chain may not overlap the corresponding UL transmission period, and the gap and the corresponding UL transmission period may be separated by several symbols or more.

Method 3: If the UTS gaps (e.g., gap_1 and gap_2) configured (or reported) for each of the two bands are different, a UTS gap of "max(gap_1, gap_2)" length may be applied to the two bands based on the "(start point) early UL transmission period". This method may also include a case in which "max(gap_1, gap_2)=gap_1=gap_2".

As another method, whether to apply method 3 or another method (e.g., method 1 above) may be configured/indicated via RRC, MAC-CE, or the like.

Method 4: If the UTS gaps (e.g., gap_1 and gap_2) configured (or reported) for each of the two bands are different, a UTS gap of "max(gap_1, gap_2)" length may be applied to the two bands based on the "start point of the (start point) early UL transmission period" (or "start point of the slot of early UL transmission"). This method may also include a case in which "max(gap_1, gap_2)=gap_1=gap_2".

As another method, whether to apply method 4 or another method (e.g., method 1 above) may be configured/indicated via RRC, MAC-CE, or the like.

Method 5: The UTS gaps (e.g., gap_1 and gap_2) configured (or reported) for each of the two bands may be configured/applied to each band to be consecutive. For example, a gap_1 section may be configured to [t_a, t_b] and a gap_2 section may be configured to [t_b, t c], and [t_a, t_c] may be configured/applied to appear to be one continuous gap. In this case, a time point t_a (or t_b or t_c) may be configured to be a start point of early UL transmission (start point) (or a start time of a slot of the early UL transmission) from among the two UL transmissions. For example, if the gap_1 period to be applied to the original early UL transmission is [t_a, t_b] and the gap_2 period to be applied to the late UL transmission is [t_b+x, t_c+x], the UTS operation and UL transmission may be performed in a state in which the corresponding gap_2 period is changed to [t_b, t_c] (thereby changing to one continuous gap).

Method 6: (If more than two UTS triggerings are allowed during one slot length) the UTS gaps (e.g., gap_1 and gap_2) configured (or reported) for each of the two bands may be applied independently to the UL transmissions of each UL band.

[1-6] The proposed method described above may not be limited to Tx switching cases/patterns due to 1-port UL transmission scheduled or configured in each of the two bands and may be applied to all Tx switching cases/patterns related to two or more band pairs. For example, even when switching from state A(1T)+B(1T) to state C(2T), if switching periods reported to a band pair {A,C} and a band pair {B,C} are different, a switching gap of the corresponding Tx switching may be determined as a larger value (=max) of the two

## [2] Method of determining switching gap in Tx switching case in multiple band pairs in which different switching periods are reported

[2-1] A UE with UL Tx switching configured may report a switching period required for Tx chain switching in band pair units. For example, for four bands A, B, C, and D, the UE may report respective switching periods for the six band pairs (i.e., {A,B}, {A,C}, {A,D}, {B,C}, {B,D}, and {C,D}). When the Tx chain is switched in some of the bands (or band pairs) configured in the UE, UL transmission in other bands (or band pairs) may also be restricted during the corresponding switching period. In this way, a time duration during which UL transmission is restricted in all bands of the UE due to a specific Tx switching case/pattern may be expressed as a switching gap of the corresponding Tx switching. Therefore, if a specific Tx switching case/pattern triggers switching across multiple band pairs, and the switching period reported for respective band pairs are not identical, a method for determining the switching gap of the corresponding Tx switching may be required.

[2-2] In the recent RAN4 standards meeting, it is agreed that when Tx switching occurs in two band pairs with different switching periods, a larger value of the two switching gaps may be a switching gap for Tx switching.

[2-3] The following expressions may be used in the explanation below.

- period(A,B) = Switching period reported for band pair {A,B}
- period(A,C) = Switching period reported for band pair {A,C}
- period(A,D) = Switching period reported for band pair {A,D}
- period(B,C) = Switching period reported for band pair {B,C}
- period(B,D) = Switching period reported for band pair {B,D}
- period(C,D) = Switching period reported for band pair {C,D}

Tx switching case/pattern: A(1T)+B(1T) -> C(1T)+D(1T)

[2-4] For a UE configured for UL Tx switching in four bands (e.g., bands A, B, C, D), when C(1p)+D(1p) occurs in the A(1T)+B(1T) state, the two Tx may be switched to a band C and a band D one by one each. In this case, (depending on a UE) the Tx switching may be performed in one of two patterns as follows.

Pattern 1: When Tx of the band A is switched to the band C, and Tx of the band B is switched to the band D. In this case, the switching gap of the corresponding Tx switching can be determined as Max{period(A,C), period(B,D)}.

Pattern 2: When Tx of the band A is switched to the band D, and Tx of the band B is switched to the band C. In this case, the switching gap of the corresponding Tx switching may be determined as Max{period(A,D), period(B,C)}.

[2-5] For the Tx switching of [2-4] above, (if not configured/indicated to operate in either pattern1 or pattern2), the UE may determine the switching gap as one of the following.

- switching_gap1 = min{ Max{period(A,C), period(B,D)}, Max{period(A,D), period(B,C)} }
- switching_gap2 = Max{ period(A,C), period(B,D), period(A,D), period(B,C) }

switching_gap1 may be understood as applying a minimum value from among switching gaps of each of pattern 1 and pattern 2 of [2-4] above as a switching gap of the corresponding Tx switching, while switching_gap2 may be understood as applying the longest switching gap by considering all possible switching methods.

[2-6] For the Tx switching of [2-4] above, the UE may be configured via RRC to switch between pattern 1 and pattern 2. If switching may be performed in either Pattern 1 or Pattern 2 depending on a UE implementation, a BS may not be capable of determining a switching gap of the corresponding Tx switching to the same value as the UE. For example, if period (A,C), period (B,D), and period (A,D) are all 35 usec and period (B,C) is 210 usec, a switching gap of pattern 1 may be determined as 35 usec and a switching gap of pattern 2 may be determined as 210 usec. Therefore, if the BS assumes 210 usec even though the UE actually switches to pattern 1, or if the BS assumes 35 usec even though the UE actually switches to pattern 2, switching gaps assumed by the BS and the UE may be different, which may lower resource efficiency or cause transmission data reception to not be performed properly.

[2-7] For the Tx switching of [2-4] above, the UE may report whether to switch between pattern 1 and pattern 2 through UE capability. For example, a UE may report its possible (or preferred) method for corresponding Tx switching in the form of {pattern1, pattern2, both}, where "both" may mean that the UE may support both pattern 1 and pattern 2. In this case, the UE reports "both" and/or there is no RRC configuration for the switching method (described in [2-6] above) (or before receiving the RRC configuration), the switching gap may be determined as either switching_gap1 or switching_gap2 of [2-5] above.

[2-8] For the Tx switching of [2-4] above, the UE may report a band to which each Tx chain may (or may not) be connected through the UE capability. The UE may configure/receive indications for the bands to which each Tx chain may (or may not) be connected via RRC, or the like. When the UE reports that a specific Tx chain may be connected to all bands and/or there is no RRC configuration for whether a band may be connected per Tx chain (or before receiving the RRC configuration), the switching gap may be determined as either switching_gap1 or switching_gap2 of [2-5] above.

Tx switching case/pattern: A(1T)+B(1T) -> A(1T)+C(1T), or, A(1 T)+B(1T) -> B(1T)+C(1T)

[2-9] For a UE configured for UL Tx switching in three or four bands (e.g., bands A, B, C, and D), when X(1p)+C(1p) occurs in the A(1T)+B(1T) state (X means A or B), the Tx switching may be performed in one of the following two patterns depending on the UE. (A description is given assuming X=B)

Pattern 3: When Tx of the band A is switched to the band C, and Tx of the band B is maintained in band B. In this case, the switching gap of the corresponding Tx switching may be determined as period(A,C).

Pattern 4: When Tx of the band A is switched to the band B, and Tx of the band B is switched to the band C. In this case, the switching gap of the corresponding Tx switching may be determined as Max{period(A,B), period(B,C)}.

To explain further, if one of the Tx chains of the UE (=Tx#1) may be connected to the band A and the band B but not to the band C, and the other Tx chain (=Tx#2) may be connected to the band B and the band C, and if the A(1T)+B(1T) state is a state in which Tx#1 is connected to the band A and Tx#2 is connected to band B, the UE may perform the corresponding Tx switching in the manner of Pattern 4.

[2-10] For the Tx switching of [2-9] above, (if not configured/indicated to operate in either pattern3 or pattern4), the UE may determine the switching gap as one of the following.

- switching_gap3 = min{ period(A,C), Max {period(A,B), period(B,C)} }
- switching_gap4 = Max{ period(A,C), period(A,B), period(B,C) }

switching_gap3 may be understood as applying a minimum value from among switching gaps of each of pattern 3 and pattern 4 of [2-9] above as a switching gap of the corresponding Tx switching, while switching_gap4 may be understood as applying the longest switching gap by considering all possible switching methods.

[2-11] For the Tx switching of [2-9] above, the UE may be configured via RRC to switch between pattern 3 and pattern 4. If switching may be performed in either Pattern 3 or Pattern 4 depending on a UE implementation, a BS may not be capable of determining a switching gap of the corresponding Tx switching to the same value as the UE. For example, if period (A,C) is 35 usec and period (A,B) and period (B,C) are 210 usec, a switching gap of pattern 3 may be determined as 35 usec and a switching gap of pattern 4 may be determined as 210 usec. Therefore, if the BS assumes 210 usec even though the UE actually switches to pattern 3, or if the BS assumes 35 usec even though the UE actually switches to pattern 4, switching gaps assumed by the BS and the UE may be different, which may lower resource efficiency or cause transmission data reception to not be performed properly.

[2-12] For the Tx switching of [2-9] above, the UE may report whether to switch between pattern 3 and pattern 4 through UE capability. For example, a UE may report its possible (or preferred) method for corresponding Tx switching in the form of {pattern3, pattern4, both}, where "both" may mean that the UE may support both pattern 3 and pattern 4. In this case, the UE reports "both" and/or there is no RRC configuration for the switching method (described in [2-11] above) (or before receiving the RRC configuration), the switching gap may be determined as either switching_gap3 or switching_gap4 of [2-10] above.

[2-13] For the Tx switching of [2-9] above, the UE may report a band to which each Tx chain may (or may not) be connected through the UE capability. The UE may configure/receive indications for the bands to which each Tx chain may (or may not) be connected via RRC, or the like. When the UE reports that a specific Tx chain may be connected to all bands and/or there is no RRC configuration for whether a band may be connected per Tx chain (or before receiving the RRC configuration), the switching gap may be determined as either switching_gap3 or switching_gap4 of [2-10] above.

A calculation principle of switching_gap1 of [2-5] above (or switching_gap3 of [2-10]) is not limited to the Tx switching case/pattern of [2-4] above (or [2-9]). That is, if two or more band pairs reported with different switching periods are included in one switching case/pattern (as in [2-4], and [2-9] above), and the corresponding Tx switching may be operated in two or more ways, the switching gap in this case may be determined as the minimum value from among the switching gaps for each operation mode.

Alternatively, a calculation principle of switching_gap2 of [2-5] above (or switching_gap4 of [2-10]) is not limited to the Tx switching case/pattern of [2-4] above (or [2-9]). That is, if two or more band pairs reported with different switching periods are included in one switching case/pattern (as in [2-4], and [2-9] above), and the corresponding Tx switching may be operated in two or more ways, the switching gap in this case may be determined as the maximum value from among the switching gaps for each operation mode.

[3] Method of limiting occurrence of continuous UL Tx switching for specific time period in switching-pair units

[3-1] The following is one of the UL Tx switching related characteristics defined in 38.214.

[Table 8]

| The UE does not expect to perform more than one uplink switching in a slot with $\mu UL = \max(\mu UL1, \mu UL2)$, where the $\mu UL1$ corresponds to the subcarrier spacing of the active UL BWP of one uplink carrier before the switching gap and the $\mu UL2$ corresponds to the subcarrier spacing of the active UL BWP of the other uplink carrier after the switching gap. |
| --- |

That is, the UE may not expect more than two UTS triggerings to occur during one slot length. In this case, one slot is determined based on an SCS configured in an active UL BWP of the two UL carriers (or bands) before and after UTS switching.

[3-2] The contents of Table 8 above specify that when the number of bands configured for UL Tx switching in a UE is 2, 2 UTS may not be triggered consecutively during one slot. When the number of bands configured for UL Tx switching in the UE is three or more, it may be ambiguous whether any UTS may not be triggered consecutively for one slot for all bands configured for UTS (i.e., three or more bands), or whether two UTSs may not be triggered consecutively for one slot for two bands in which UTS is triggered (i.e., switch-from band and switch-to band).

[3-3] As described above, the constraint that consecutive UTS may not be triggered during the one slot may operate in the following two ways.

- Alt 1: The UE may not expect any UTS to be triggered consecutively for one slot for any (two) bands configured in UTS. For example, when three bands (e.g., band A, band B, and band C) are configured in UTS, after UTS is triggered between specific two bands during one slot, UTS is not triggered between the same or different specific two bands. In this case, a slot means a slot length corresponding to the maximum (or minimum) value of the SCS of the active UL BWP of all UL bands (or UL carriers) configured in the UTS.

- Alt 2: The UE may not expect UTS to be triggered consecutively for one slot for the same specific two bands. For example, when three bands (e.g., band A, band B, and band C) are configured in UTS, after UTS is triggered between specific two bands during one slot, UTS is not triggered between the same specific two bands. However, UTS may be triggered between specific two bands and before one slot elapses, UTS may be triggered between other combinations of two bands. In this case, a slot means a slot length corresponding to the maximum (or minimum) value of the SCS of the active UL BWP of specific two UL bands (or UL carriers).

The UE may report one of Alt 1 and Alt 2 above (if three or more bands are configured for UTS) as UE capability to the BS. The BS may configure/indicate the UE to select one of Alt 1 and Alt 2 (based on the UE capability of the UE) via RRC or MAC-CE.

[3-4] Alt 1 and Alt 2 of [3-3] described above may be applied only under a certain condition. For example, Alt 1 (or Alt 2) may be applied only when [Configuration 1] or [Configuration 2] is described in [1-3]. Alternatively, Alt 1 or Alt 2 may be applied only when both Tx chains are switched. For example, if 1-port UL transmission occurs in each of two UL bands in which Tx chains are not connected (or configured) (or, if 2-port UL transmission occurs in one UL band in which Tx chains are not connected (or configured)), both Tx chains may need to be switched, and the configuration that does not allow consecutive UTS triggers during the one slot may be defined/configured as such switching not occurring consecutively during one slot.

The contents of the present disclosure are not limited to transmission and reception of UL and/or DL signals. For example, the contents of the present disclosure may also be used in direct communication between UEs. A BS in the present disclosure may be a concept that includes not only a BS but also a relay node. For example, an operation of the BS in the present disclosure may be performed by the BS, but may also be performed by the relay node.

It is obvious that the examples of the proposed method described above may also be included as one of the implementation methods of the present disclosure, and thus may be considered as a kind of proposed method. The proposed methods described above may be implemented independently, but may also be implemented in the form of a combination (or merge) of some proposed methods. A rule may be defined such that information on whether the proposed methods are applicable (or information on the rules of the proposed methods) is reported by the BS to the UE or by a receiving UE to a receiving UE through a predefined signal (e.g., physical layer signal or higher layer signal).

Implementation example

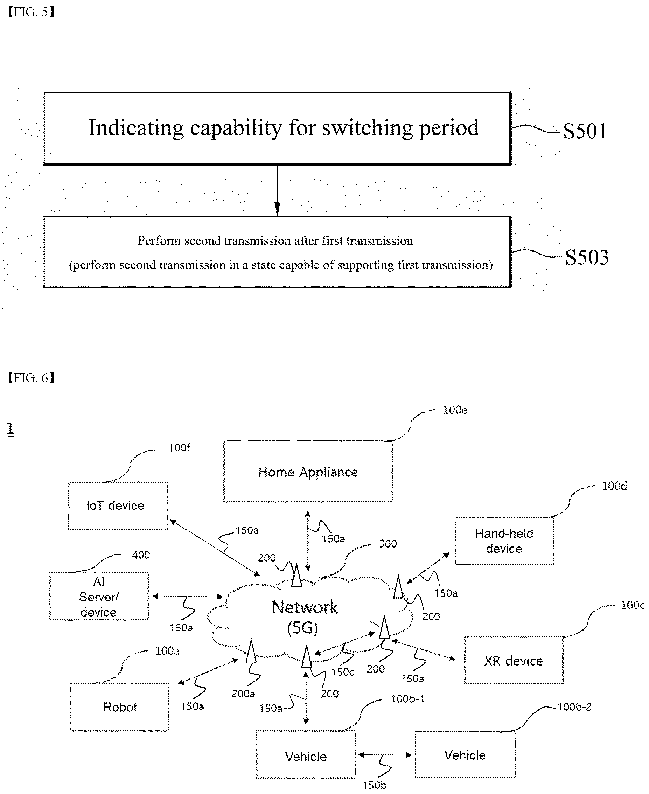

FIG. 5 is a flowchart of a signal transmission and reception method according to embodiments of the present disclosure.

Referring to FIG. 5, a signal transmission and reception method according to an embodiment of the present disclosure may be performed by a UE. The method may include the following: indicating a capability for a switching period (S501), and performing second transmission after performing first transmission (S503). A signal transmission and reception method by a BS corresponding to the embodiment of the present disclosure in FIG. 5 may include the following: receiving a capability for a switching period from a UE (S501); and receiving second transmission after receiving first transmission from the UE (S503).

In addition to the operations of FIG. 5, one or more of the operations described in Sections [1] to [3] may be performed.

Referring to Section [2], the capability for the switching period indicated by the UE may include information on each of all band pairs related to UL switching. For example, in one instance of UL switching, even if the actual Tx chain switching occurs over three bands, if four bands are configured for the UL switching through RRC signaling, the UE indicates the capability for a switching period for each of all frequency band pairs capable of being formed from the four bands

As described in Section [2-4], in the case of 'Tx switching case/pattern: A(1T)+B(1T) -> C(1T)+D(1T)', that is, when the first transmission is 1-port transmission on each carrier of band A and band B, and when the second transmission is 1-port transmission on each carrier of band C and band D, referring to Section [2-7], the UE may indicate the capabilities for the switching periods for all associated band pairs. Therefore, the UE indicates capabilities for switching period AC for a band pair consisting of band A and band C, switching period AD for a band pair consisting of band A and band D, switching period BC for a band pair consisting of band B and band C, and switching period BD for a band pair consisting of band B and band D. The first transmission may actually be performed, but the second transmission may be performed without the first transmission, even if the UE is in a state where the UE may support the first transmission.

Referring to Section [2-5], the UE may determine a switching gap, which is represented as switching_gap1, by considering pattern 1 and pattern 2. In summary, a UL switching gap is the minimum of a first value and a second value, where the first value is the maximum of switching period AC and switching period BD, and the second value is the maximum of switching period AD and switching period BC. The 1-port transmission on each of the bands A, B, C, and D is omitted during the switching gap switching_gap1 . In other words, a portion of the 1-port transmission on each of the bands A, B, C, and D that overlaps with the switching gap switching_gap1 in the time domain is dropped. By using switching_gap1 instead of switching_gap2, unnecessary extension of the switching gap may be avoided

As described in Section [2-4], pattern 1 is a pattern where one of the two Tx chains switches between band A and band C, while the other Tx chain switches between band B and band D. Pattern 2 is a pattern where one of the two Tx chains switches between band A and band D, while the other Tx chain switches between band B and band C. Patterns 1 and 2 may also be referred to as case 1 and case 2. For one instance of uplink switching involving bands A to D, the UE may report a case that the UE prefers as a UE capability. The UE capability regarding which case the UE prefers may be reported or indicated along with or separately from the UE capabilities for the switching periods. The UE capability regarding which case the UE prefers may be reported on a band combination basis.

The BS may allow the use of the preferred case for the UE based on the UE capability regarding which case the UE prefers. Switching_gap1 may be restricted to be used only when the use of the preferred case for the UE is allowed.

Additionally, whether case 1 or case 2 will be used can be determined based on an order in which the 1-port transmission on each carrier of bands A to D is scheduled. For example, Tx chain switching may be performed between the earlier transmission in the time domain between the transmission on band A and the transmission on band B and the earlier transmission in the time domain between the transmission on band C and the transmission on band D. Alternatively, the Tx chain switching may be performed between the later transmission in the time domain between the transmission on band A and the transmission on band B and the later transmission in the time domain between the transmission on band C and the transmission on band D.

In addition to the operations described with respect to FIGS. 5 and 6, one or more of the operations described with respect to FIGS. 1 to 4 and/or the operations described in sections [1] to [3] may be additionally performed in combination

## Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

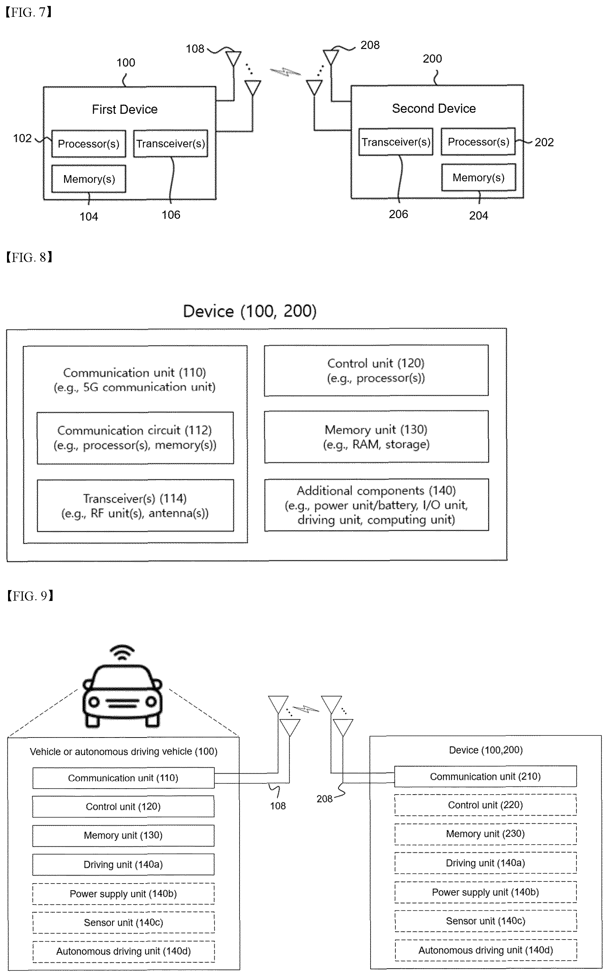

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1.  A method of transmitting and receiving signals by a user equipment (UE) in a wireless communication system, the method comprising:

    indicating capabilities for switching period AC for a band pair consisting of band A and band C, switching period AD for a band pair consisting of the band A and band D, switching period BC for a band pair consisting of band B and the band C, and switching period BD for a band pair consisting of the band B and the band D; and
    performing 1-port transmission on each carrier of the bands C and D in an operational state that supports 1-port transmission on each carrier of the bands A and B,
    wherein for one instance of uplink switching including the bands A, B, C, and D, information on which of case 1 or case 2 is preferred for the uplink switching is reported,
    wherein the case 1 is a case in which one of two transmission (Tx) chains switches from the band A to the band C and the other Tx chain switches from the band B to the band D, and
    wherein the case 2 is a case in which one of two Tx chains switches from the band A to the band D and the other Tx chain switches from the band B to the band C.

2.  The method of claim 1, wherein the 1-port transmission on each carrier of the bands A, B, C, and D is omitted during a uplink switching gap of the uplink switching,

    wherein the uplink switching gap is a minimum of a first value and a second value,
    wherein the first value is a maximum of the switching period AC and the switching period BD, and
    wherein the second value is a maximum of the switching period AD and the switching period BC.

3.  The method of claim 1, wherein the information is reported as a UE capability.

4.  The method of claim 1, wherein the information is reported on a band combination basis.

5.  The method of claim 1, wherein one of case 1 or case 2 is applied to the uplink switching based on the information.

6.  The method of claim 5, wherein based on a scheduling order of the 1-port transmission on the carriers of the bands A, B, C, and D, one of case 1 or case 2 is applied to the uplink switching.

7.  The method of claim 5, wherein radio resource control (RRC) signaling is received to configure one of case 1 or case 2 based on the information.

8.  A user equipment (UE) configured to transmit and receive signals in a wireless communication system, the UE comprising:

    at least one transceiver;

at least one processor; and

at least one memory operably connected to the at least one processor and storing instructions that, when executed, cause the at least one processor to perform specific operations comprising:

indicating capabilities for switching period AC for a band pair consisting of band A and band C, switching period AD for a band pair consisting of the band A and band D, switching period BC for a band pair consisting of band B and the band C, and switching period BD for a band pair consisting of the band B and the band D; and

performing 1-port transmission on each carrier of the bands C and D after performing 1-port transmission on each carrier of the bands A and B,

wherein based on that one instance of uplink switching including the bands A, B, C, and D is performed, information on which of case 1 or case 2 is preferred for the uplink switching is reported,

wherein the case 1 is a case in which one of two transmission (Tx) chains switches from the band A to the band C and the other Tx chain switches from the band B to the band D, and

wherein the case 2 is a case in which one of two Tx chains switches from the band A to the band D and the other Tx chain switches from the band B to the band C.

9. An apparatus for a user equipment (UE), the apparatus comprising:

at least one processor; and

at least one computer memory operably connected to the at least one processor and configured to, when executed, cause the at least one processor to perform operations comprising:

indicating capabilities for switching period AC for a band pair consisting of band A and band C, switching period AD for a band pair consisting of the band A and band D, switching period BC for a band pair consisting of band B and the band C, and switching period BD for a band pair consisting of the band B and the band D; and

performing 1-port transmission on each carrier of the bands C and D after performing 1-port transmission on each carrier of the bands A and B,

wherein based on that one instance of uplink switching including the bands A, B, C, and D is performed, information on which of case 1 or case 2 is preferred for the uplink switching is reported,

wherein the case 1 is a case in which one of two transmission (Tx) chains switches from the band A to the band C and the other Tx chain switches from the band B to the band D, and

wherein the case 2 is a case in which one of two Tx chains switches from the band A to the band D and the other Tx chain switches from the band B to the band C.

10. A computer-readable non-volatile storage medium comprising at least one computer program configured to cause a user equipment (UE) having at least one processor to perform operations comprising:

indicating capabilities for switching period AC for a band pair consisting of band A and band C, switching period AD for a band pair consisting of the band A and band D, switching period BC for a band pair consisting of band B and the band C, and switching period BD for a band pair consisting of the band B and the band D; and

performing 1-port transmission on each carrier of the bands C and D after performing 1-port transmission on each carrier of the bands A and B,

wherein based on that one instance of uplink switching including the bands A, B, C, and D is performed, information on which of case 1 or case 2 is preferred for the uplink switching is reported,

wherein the case 1 is a case in which one of two transmission (Tx) chains switches from the band A to the band C and the other Tx chain switches from the band B to the band D, and

wherein the case 2 is a case in which one of two Tx chains switches from the band A to the band D and the other Tx chain switches from the band B to the band C.

11. A method of transmitting and receiving signals by a base station (BS) in a wireless communication system, the method comprising:

receiving from a user equipment (UE) capabilities for switching period AC for a band pair consisting of band A and band C, switching period AD for a band pair consisting of the band A and band D, switching period BC for a band pair consisting of band B and the band C, and switching period BD for a band pair consisting of the band B and the band D; and

receiving 1-port transmission on each carrier of the bands C and D after receiving 1-port transmission on each carrier of the bands A and B from the UE,

wherein based on that one instance of uplink switching including the bands A, B, C, and D is performed, information on which of case 1 or case 2 the UE prefers for the uplink switching is reported,

wherein the case 1 is a case in which one of two transmission (Tx) chains switches from the band A to the band C and the other Tx chain switches from the band B to the band D, and

wherein the case 2 is a case in which one of two Tx chains switches from the band A to the band D and the other Tx chain switches from the band B to the band C.

12. A base station (BS) configured to transmit and receive signals in a wireless communication system, the BS comprising:

at least one transceiver;
at least one processor; and
at least one memory operably connected to the at least one processor and storing instructions that, when executed, cause the at least one processor to perform specific operations comprising:

receiving from a user equipment (UE) capabilities for switching period AC for a band pair consisting of band A and band C, switching period AD for a band pair consisting of the band A and band D, switching period BC for a band pair consisting of band B and the band C, and switching period BD for a band pair consisting of the band B and the band D; and

receiving 1-port transmission on each carrier of the bands C and D after receiving 1-port transmission on each carrier of the bands A and B from the UE,

wherein based on that one instance of uplink switching including the bands A, B, C, and D is performed, information on which of case 1 or case 2 the UE prefers for the uplink switching is reported,

wherein the case 1 is a case in which one of two transmission (Tx) chains switches from the band A to the band C and the other Tx chain switches from the band B to the band D, and

wherein the case 2 is a case in which one of two Tx chains switches from the band A to the band D and the other Tx chain switches from the band B to the band C.

【FIG. 1】

| | One Frame (10ms) | |
|---|---|---|
| . . . . . . | | . . . . . . |

| | Half-Frame (5ms) | | Half-Frame (5ms) | |
|---|---|---|---|---|
| . . . . . . | | | | . . . . . . |

| | Subframe 0 (1ms) | | Subframe 4 (1ms) | Subframe 5 (1ms) | | Subframe 9 (1ms) | |
|---|---|---|---|---|---|---|---|
| . . . . . . | | . . . . . . | | | . . . . . . | | . . . . . . |

Subframe (1ms)

| 15KHz | Slot (14 symbols) |
|---|---|

1ms

| 30KHz | Slot 0 (14 symbols) | Slot 1 |
|---|---|---|

500us

| 60KHz | Slot 0 (14 symbols) | Slot 1 | Slot 2 | Slot 3 |
|---|---|---|---|---|

250us

| 120KHz | Slot 0 (14 symbols) | Slot 1 | Slot 2 | Slot 3 | Slot 4 | Slot 5 | Slot 6 | Slot 7 |
|---|---|---|---|---|---|---|---|---|

125us

【FIG. 2】

【FIG. 3】

One slot

【FIG. 4】

Previous transmission          Current transmission

(a)

Previous transmission          Current transmission

(b)

【FIG. 5】

Indicating capability for switching period ~~S501

Perform second transmission after first transmission
(perform second transmission in a state capable of supporting first transmission) ~~S503

【FIG. 6】

<u>1</u>

100e
Home Appliance

100f
IoT device

100d
Hand-held device

150a
150a
300
200

400
AI Server/ device

100a
Robot

Network (5G)

150a
150a

200a
200
150a

150c
200
150a

100c
XR device

100b-1
Vehicle

100b-2
Vehicle

150b

【FIG. 7】

【FIG. 8】

Device (100, 200)

Communication unit (110)
(e.g., 5G communication unit)

Control unit (120)
(e.g., processor(s))

Communication circuit (112)
(e.g., processor(s), memory(s))

Memory unit (130)
(e.g., RAM, storage)

Transceiver(s) (114)
(e.g., RF unit(s), antenna(s))

Additional components (140)
(e.g., power unit/battery, I/O unit,
driving unit, computing unit)

【FIG. 9】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

Device (100,200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
|---|
| **PCT/KR2023/017263** |

### A. CLASSIFICATION OF SUBJECT MATTER

**H04W 72/04**(2009.01)i; **H04W 72/21**(2023.01)i; **H04W 72/23**(2023.01)i; **H04W 8/24**(2009.01)i; **H04L 5/00**(2006.01)i; **H04L 27/26**(2006.01)i

According to International Patent Classification (IPC) or to both national classification and IPC

### B. FIELDS SEARCHED

Minimum documentation searched (classification system followed by classification symbols)

H04W 72/04(2009.01); H04B 7/04(2006.01); H04B 7/08(2006.01); H04B 7/14(2006.01); H04W 76/16(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: band, switching, capability, port, antenna, uplink, preference, report, transmit(Tx), chain, case, gap, carrier, radio resource control(RRC), signaling

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0036346 A (QUALCOMM INCORPORATED) 02 April 2021 (2021-04-02)<br>See paragraphs [0040]-[0090]; and figures 3-9. | 1-12 |
| A | KR 10-2002-0022114 A (KONINKLIJKE PHILIPS ELECTRONICS N.V.) 23 March 2002 (2002-03-23)<br>See paragraphs [0012]-[0024]; and figures 1-5. | 1-12 |
| A | KR 10-2012-0108019 A (QUALCOMM INCORPORATED) 04 October 2012 (2012-10-04)<br>See paragraphs [0010]-[0124]; and figures 1-13. | 1-12 |
| A | KR 10-2011-0112170 A (LG ELECTRONICS INC.) 12 October 2011 (2011-10-12)<br>See paragraphs [0025]-[0117]; and figures 1-10. | 1-12 |
| A | US 2003-0013482 A1 (BRANKOVIC, Veselin) 16 January 2003 (2003-01-16)<br>See claims 1-28. | 1-12 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 February 2024** | **14 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/017263**

| Patent document cited in search report | | | Publication date (day/month/year) | Patent family member(s) | | | Publication date (day/month/year) |
|---|---|---|---|---|---|---|---|
| KR | 10-2021-0036346 | A | 02 April 2021 | CN | 112514432 | A | 16 March 2021 |
| | | | | EP | 3831107 | A1 | 09 June 2021 |
| | | | | SG | 11202013161 | A | 30 March 2021 |
| | | | | TW | 202014039 | A | 01 April 2020 |
| | | | | US | 2020-0037383 | A1 | 30 January 2020 |
| | | | | WO | 2020-028366 | A1 | 06 February 2020 |
| KR | 10-2002-0022114 | A | 23 March 2002 | AT | 417420 | T | 15 December 2008 |
| | | | | CN | 1199373 | C | 27 April 2005 |
| | | | | CN | 1383629 | A | 04 December 2002 |
| | | | | EP | 1249081 | A1 | 16 October 2002 |
| | | | | EP | 1249081 | B1 | 10 December 2008 |
| | | | | JP | 2004-503128 | A | 29 January 2004 |
| | | | | US | 2002-0004375 | A1 | 10 January 2002 |
| | | | | US | 2005-0191978 | A1 | 01 September 2005 |
| | | | | US | 6871052 | B2 | 22 March 2005 |
| | | | | US | 7302244 | B2 | 27 November 2007 |
| | | | | WO | 02-03570 | A1 | 10 January 2002 |
| KR | 10-2012-0108019 | A | 04 October 2012 | CN | 102668408 | A | 12 September 2012 |
| | | | | CN | 102668408 | B | 18 May 2016 |
| | | | | EP | 2517377 | A1 | 31 October 2012 |
| | | | | JP | 2013-516110 | A | 09 May 2013 |
| | | | | JP | 2016-007009 | A | 14 January 2016 |
| | | | | JP | 6174089 | B2 | 02 August 2017 |
| | | | | TW | 201132021 | A | 16 September 2011 |
| | | | | TW | 201141107 | A | 16 November 2011 |
| | | | | TW | 201141110 | A | 16 November 2011 |
| | | | | US | 2011-0249576 | A1 | 13 October 2011 |
| | | | | US | 2011-0249760 | A1 | 13 October 2011 |
| | | | | US | 2011-0250926 | A1 | 13 October 2011 |
| | | | | WO | 2011-084715 | A1 | 14 July 2011 |
| | | | | WO | 2011-084716 | A1 | 14 July 2011 |
| | | | | WO | 2011-084717 | A1 | 14 July 2011 |
| KR | 10-2011-0112170 | A | 12 October 2011 | EP | 2557699 | A2 | 13 February 2013 |
| | | | | EP | 2557699 | B1 | 07 November 2018 |
| | | | | JP | 2013-524612 | A | 17 June 2013 |
| | | | | JP | 5536274 | B2 | 02 July 2014 |
| | | | | US | 2013-0029711 | A1 | 31 January 2013 |
| | | | | US | 9215713 | B2 | 15 December 2015 |
| | | | | WO | 2011-126227 | A2 | 13 October 2011 |
| | | | | WO | 2011-126227 | A3 | 26 January 2012 |
| US | 2003-0013482 | A1 | 16 January 2003 | CA | 2276625 | A1 | 03 January 2000 |
| | | | | DE | 69836728 | T2 | 26 April 2007 |
| | | | | EP | 0969602 | A1 | 05 January 2000 |
| | | | | EP | 0969602 | B1 | 27 December 2006 |
| | | | | JP | 2000-049637 | A | 18 February 2000 |

Form PCT/ISA/210 (patent family annex) (July 2022)

29